(19) **Europäisches Patentamt / European Patent Office / Office européen des brevets**

(11) **EP 1 407 527 B1**

(12) **FASCICULE DE BREVET EUROPEEN**

(45) Date de publication et mention de la délivrance du brevet:
**12.11.2014 Bulletin 2014/46**

(21) Numéro de dépôt: **02764991.2**

(22) Date de dépôt: **16.07.2002**

(51) Int Cl.:
***H02K 11/04*** *(2006.01)*

(86) Numéro de dépôt international:
**PCT/FR2002/002542**

(87) Numéro de publication internationale:
**WO 2003/009452 (30.01.2003 Gazette 2003/05)**

(54) **AGENCEMENT DE REDRESSEMENT DE COURANT POUR MACHINES ELECTRIQUES TOURNANTES, NOTAMMENT ALTERNATEUR POUR VEHICULE AUTOMOBILE**

GLEICHRICHTER FÜR ELEKTRISCHE MASCHINEN, INSBESONDERE LICHTMASCHINEN FÜR KRAFTFAHRZEUGE

CURRENT RECTIFIER ASSEMBLY FOR ROTATING ELECTRICAL MACHINES, IN PARTICULAR MOTOR VEHICLE ALTERNATOR

(84) Etats contractants désignés:
**DE ES FR GB IT**

(30) Priorité: **16.07.2001 FR 0109482**
**16.07.2001 FR 0109477**

(43) Date de publication de la demande:
**14.04.2004 Bulletin 2004/16**

(60) Demande divisionnaire:
**14188159.9**

(73) Titulaire: **VALEO EQUIPEMENTS ELECTRIQUES MOTEUR**
**94017 Créteil Cedex (FR)**

(72) Inventeurs:
• **AESCHLIMANN, Michel**
  **F-75012 Paris (FR)**
• **ARRIGHI, Sébastien**
  **F-78000 Versailles (FR)**
• **FAVEROLLE, Pierre**
  **F-91230 Montgeron (FR)**
• **HEVIA, Thierry**
  **F-62520 Le Touquet (FR)**
• **SCHULTE, Dirk**
  **F-94120 Fontenay-sous-Bois (FR)**

• **MASRIERA, Serge**
  **F-69006 Lyon (FR)**

(74) Mandataire: **Gamonal, Didier**
**Valeo Equipements Electriques Moteur**
**Propriété Industrielle**
**2 Rue André Boulle**
**94046 Créteil Cedex (FR)**

(56) Documents cités:
**EP-A- 0 905 863    FR-A1- 2 687 861**
**US-A- 4 701 828    US-A- 5 991 184**

• **PATENT ABSTRACTS OF JAPAN vol. 010, no. 289 (E-442), 2 octobre 1986 (1986-10-02) -& JP 61 106047 A (HITACHI LTD), 24 mai 1986 (1986-05-24)**
• **PATENT ABSTRACTS OF JAPAN vol. 009, no. 061 (E-303), 19 mars 1985 (1985-03-19) -& JP 59 198862 A (NIPPON DENSO KK), 10 novembre 1984 (1984-11-10)**
• **PATENT ABSTRACTS OF JAPAN vol. 007, no. 267 (E-213), 29 novembre 1983 (1983-11-29) -& JP 58 148640 A (HITACHI SEISAKUSHO KK), 3 septembre 1983 (1983-09-03)**
• **PATENT ABSTRACTS OF JAPAN vol. 018, no. 221 (E-1540), 20 avril 1994 (1994-04-20) -& JP 06 020748 A (HONDA TSUSHIN KOGYO KK), 28 janvier 1994 (1994-01-28)**

**EP 1 407 527 B1**

## Description

### Domaine de l'invention

L'invention concerne un agencement de redressement de courant pour machines électriques tournantes, notamment alternateurs pour véhicule automobile, du type comprenant un stator et un rotor monté à l'intérieur du stator, l'agencement comportant une pluralité de diodes positives supportées par un support en forme de plaque, une pluralité de diodes négatives supportées par un support en forme de plaque, tel que le palier arrière de support du rotor de la machine, un dispositif connecteur pour électriquement interconnecter les diodes positives et négatives et des moyens générateurs d'un écoulement forcé d'un fluide de refroidissement, s'écoulant dans la direction axiale de la machine ; le support des diodes positives portant sur sa face frontale orientée vers l'axe de la machine des ailettes de refroidissement qui s'étendent dans l'écoulement axial du fluide de refroidissement dans la direction radiale de la machine. De manière connue le rotor, par l'intermédiaire de son arbre, est monté rotatif dans des paliers avant et arrière portant à cet effet chacun centralement un roulement à billes pour montage rotatif de l'arbre du rotor. Les paliers sont conformés pour porter intérieurement à leur périphérie externe le stator, plus précisément le corps que présente le stator. Les paliers sont reliés entre eux pour former un carter à l'intérieur duquel sont placés de manière précitée le rotor et le stator. Le palier arrière porte l'agencement de redressement coiffé par un capot, qui se fixe sur le palier arrière. Les supports sont métalliques ainsi que les paliers reliés à la masse et ajourés pour passage du fluide de refroidissement, tel que de l'air ; la circulation du fluide de refroidissement étant engendrée par au moins un ventilateur solidaire du rotor et placé à l'intérieur de la machine. Ces paliers sont reliés entre eux, par exemple à l'aide de vis ou de tirants pour constituer le carter.

### Etat de la technique

Un agencement de redressement de ce type permettant de transformer le courant alternatif induit du stator en courant continu pour alimenter les consommateurs du véhicule est déjà connu par le brevet français n° 2 687 861 de la demanderesse. Cet agencement de redressement est conçu pour assurer le refroidissement du support des diodes positives uniquement par convection, par l'écoulement du fluide entre les ailettes radiales, tandis que le refroidissement du support de diodes négatives se fait par conduction.

Cet agencement de redressement présente l'inconvénient qu'il ne permet pas d'augmenter la capacité de refroidissement pour qu'il puisse être utilisé dans les alternateurs de plus forte puissance, tout en assurant un encombrement acceptable.

## Objet de l'invention

L'invention a pour but de pallier l'inconvénient qui vient d'être énoncé.

Pour atteindre ce but, un agencement de redressement de courant selon l'invention est caractérisé en ce qu'il comporte des moyens de refroidissement mixte du support des diodes négatives par convection et conduction.

Selon une caractéristique de l'invention les diodes négatives sont implantées dans des surépaisseurs locales sur la face supérieure du palier arrière de la machine.

Selon une autre caractéristique de l'invention le capot comporte, au niveau du palier arrière de support des diodes négatives, des orifices latéraux d'entrée d'un flux de fluide de refroidissement radial, sous l'effet de l'écoulement du flux axial de fluide de refroidissement F1, qui passe au-dessus de la surface supérieure du palier comportant, les surépaisseurs d'implantation des diodes négatives pour joindre le flux axial F1.

Selon encore une autre caractéristique de l'invention les surépaisseurs présentent une forme tronconique dans la face supérieure desquelles sont implantées les diodes négatives.

Selon encore une autre caractéristique de l'invention comporte des moyens de refroidissement du support des diodes positives par un flux de fluide de refroidissement radial F2.

Selon encore une autre caractéristique de l'invention le support des diodes positives comporte, sur son bord orienté vers l'axe de la machine, des moyens de déviation d'une partie du flux de fluide de refroidissement axial F1 pour créer le flux radial F2 qui passe au-dessus de la surface supérieure du support dans laquelle sont implantées les diodes positives.

Selon encore une autre caractéristique de l'invention le flux de fluide de refroidissement radial F2 est amené à s'écouler sous le support des diodes positives en direction de l'axe de la machine pour rejoindre le flux de fluide de refroidissement axial F1.

Selon encore une autre caractéristique de l'invention les moyens de déviation de la partie du flux de refroidissement axial, qui constitue le flux de fluide de refroidissement radial F2 du support des diodes positives est formé par un muret prévu sur le bord orienté vers l'axe de la machine, du support des diodes positives.

Selon encore une autre caractéristique de l'invention le support des diodes positives est disposé entre le dispositif connecteur et le palier arrière de façon que le rapport de sa distance.

Selon encore une autre caractéristique de l'invention la relation entre la masse de dissipation thermique que constitue les surépaisseurs d'implantation des diodes négatives et les pertes de charge que ces surépaisseurs occasionnent est susceptible d'être optimisée par un dimensionnement approprié de la forme des surépaisseurs.

## Brève description des dessins

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :

- la figure 1 est une vue en coupe schématique radiale d'un premier mode de réalisation d'un agencement de redressement de courant selon l'invention ;
- les figures 2A et 2B sont des vues de détail illustrant l'implantation d'une diode négative dans son support, selon l'invention ;
- la figure 3 est une vue schématique en coupe radiale d'un autre mode de réalisation de l'invention,
- les figures 4A à 4D illustrent trois versions différentes de réalisation des ailettes de refroidissement radiales de l'agencement de redressement selon l'invention ;
- la figure 5 est une vue en coupe schématique radiale d'encore un autre mode de réalisation d'un agencement de redressement de courant selon l'invention,
- la figure 6 est une vue en perspective du capot représenté en 12 sur la figure 5 ;
- la figure 7 est une vue en perspective de l'agencement de redressement selon l'invention équipé de son capot et monté sur le palier arrière de l'alternateur ;
- la figure 8 est une vue en perspective d'un exemple de réalisation d'un stator et d'un rotor d'alternateur associé à l'agencement de redressement selon l'invention.

## Description de modes de réalisation de l'invention

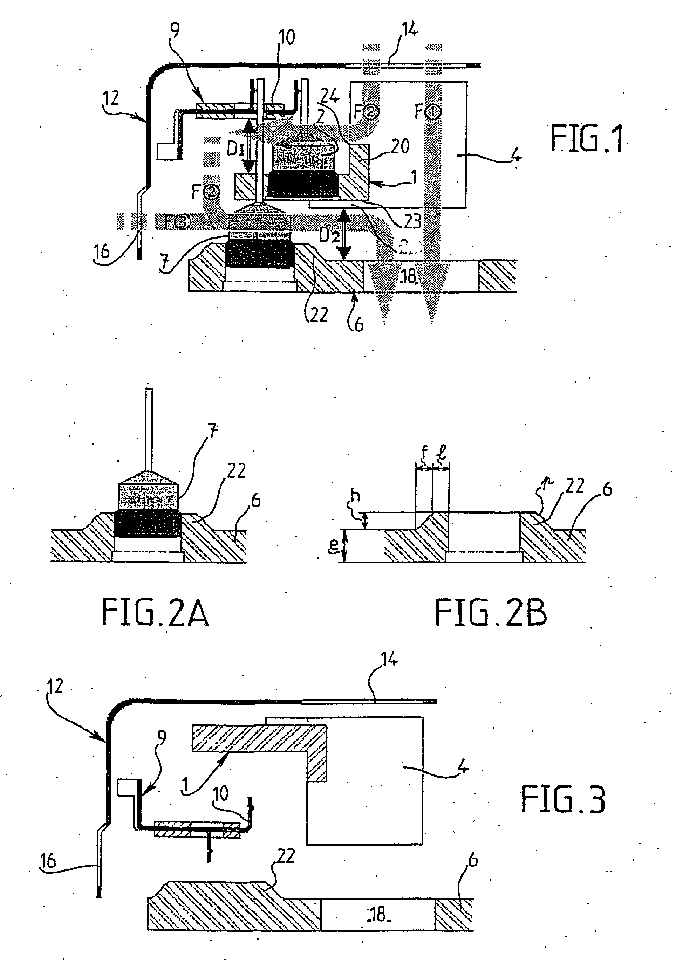

La figure 1 est une vue schématique d'un agencement de redressement de courant, par exemple d'un alternateur polyphasé, dont la structure générale est connue en soi, par exemple par le brevet français n° 2 687 861 et le brevet européen 05 15 259.

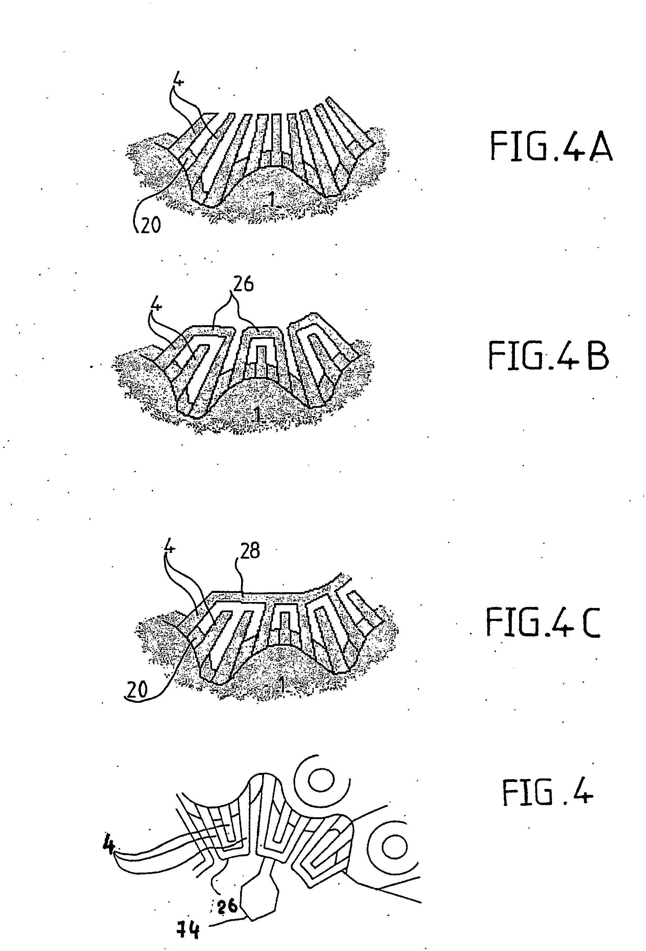

Sur les figures 1 et 4 l'agencement de redressement comporte un support 1, ici métallique, d'une pluralité de diodes positives 2, en forme de plaque qui porte sur sa face frontale orientée vers l'axe de rotation (non représenté) de la machine, des ailettes de refroidissement 4 qui s'étendent en direction de cet axe. Le support métallique, ici à base d'aluminium, a pour fonction d'assurer le refroidissement des diodes et est donc appelé radiateur positif. Ce radiateur 1 se trouve à une distance axiale prédéterminée D2 dans la direction de l'axe de la machine au-dessus du palier arrière 6 ajouré dans lequel est implantée par emmanchement une pluralité de diodes négatives 7. Le palier arrière 6 est métallique et est ici également à base d'aluminium. Le numéro de référence 9 désigne le dispositif de connexion électrique, qui est disposé au-dessus du radiateur 1 et a pour fonction d'interconnecter électriquement en 10 les queues 11 de chaque paire de diodes positive et négative 2 et 7. Ces diodes sont montées en parallèle. Il est à noter que les supports sont métalliques ainsi que les paliers reliés à la masse, tandis que le dispositif de connexion 9 est en matière électriquement isolante dans laquelle sont noyées des pistes électriques de connexion dénudées à certains endroits, de manière connue, pour notamment contact local en 10 avec les queues des diodes et liaison électrique avec les sorties des phases du stator de l'alternateur. Ces endroits dénudés sont visibles dans les figures 1, 3 et 5. Dans ces figures les parties dénudées de contact 10 avec les queues 11 sont d'orientation axiale par rapport à l'axe de rotation de la machine et sont localement embouties pour contact local avec les queues 11. Ces parties de contact sont parallèles entre elles. Les queues des diodes négatives sont plus longues que celles des diodes positives Les queues 11 sont dirigées axialement en direction opposée au palier arrière. On voit également dans ces figures de manière schématique des parties dénudées sous forme de pattes de fixation par sertissage aux sorties concernées des phases de l'alternateur.

Le dispositif de redressement qui vient d'être décrit est coiffé par un capot 12 de forme creuse, qui comporte dans sa paroi supérieure horizontale perpendiculaire à l'axe de la machine, c'est à dire d'orientation transversale, des ouvertures d'entrée 14 d'un fluide de refroidissement, par exemple de l'air, et dans sa paroi latérale annulaire d'orientation axiale des ouvertures latérales 16 d'entrée de fluide de refroidissement. Ces ouvertures se trouvent par rapport à l'axe de la machine au niveau de l'espace entre le radiateur et le palier arrière 6. Le capot est solidaire du palier arrière 6 métallique et est ici en matière électriquement isolante, avantageusement en matière plastique moulable. On notera que la paroi annulaire d'orientation axiale du capot présente uniquement les ouvertures 16 voisines du palier arrière pour canalisation du fluide de refroidissement de manière décrite ci-après. la paroi supérieure du capot constitue le fond de celui-ci

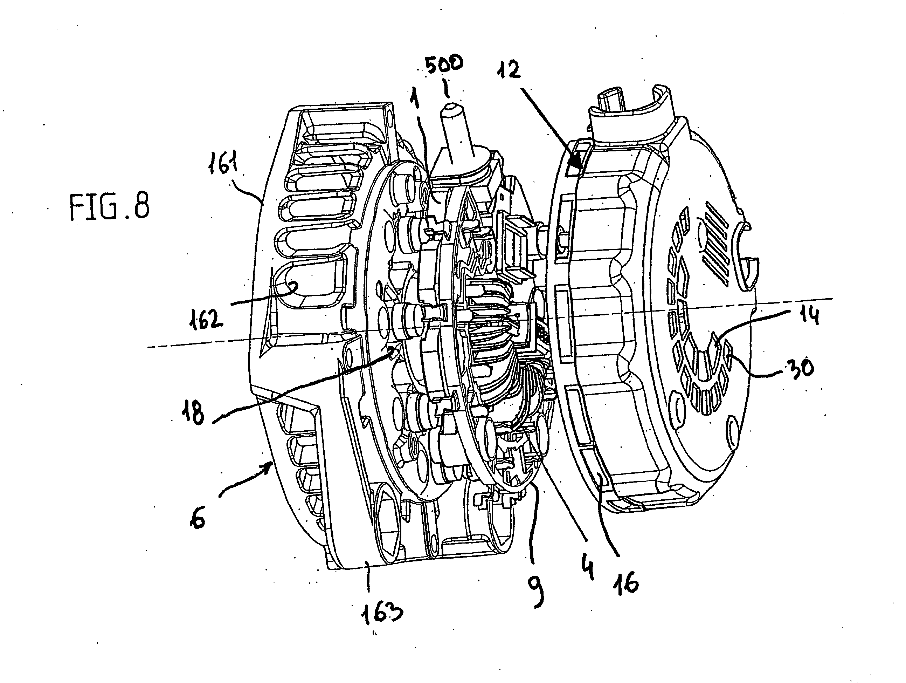

L'agencement de redressement qui vient d'être décrit est refroidi par l'écoulement forcé d'un fluide de refroidissement, avantageusement de l'air, engendré par un ventilateur connu en soi (représenté à la figure 8) et solidaire en rotation du rotor de la machine. Le palier arrière comporte des ouvertures de passage du fluide de refroidissement, qui portent la référence 18 et sont sensiblement alignés avec les ouvertures 14 dans la paroi supérieure du capot 12, fixé par exemple par encliquetage sur le palier 6.

Selon une caractéristique avantageuse de l'invention le radiateur 1 comporte au niveau de son bord radialement interne, orienté vers l'axe de la machine, un muret 20 qui s'étend axialement vers le haut, mais n'est pas obligatoire. Dans tous les cas le radiateur 1 présente une zone plane pour montage des diodes positives. Cette zone s'étend à la périphérie externe du radiateur et est d'orientation transversale par rapport à l'axe de la machine.

Selon une autre caractéristique de l'invention, le palier arrière 6 comporte à l'emplacement d'implantation de chaque diode négative 7 une surépaisseur tronconique 22 représentée plus en détail sur les figures 2A et 2B. Ces surépaisseurs tronconiques 22 sur la face supérieure du palier arrière, dans lesquelles les diodes négatives sont directement emmanchées, assurent un meilleur refroidissement des diodes. En effet, on obtient ainsi un refroidissement mixte par conduction et convection comme il sera décrit ci-après. Il est encore à noter que les ailettes de refroidissement radiales 4 se prolongent sous la face 23 du radiateur 1 jusque dans la zone d'implantation des diodes positives 2. D'autre part, les ailettes 4 s'étendent jusqu'au bord radialement externe 24 du muret 20.

L'agencement de redressement selon l'invention, notamment grâce au muret 20, permet d'obtenir une configuration de flux de refroidissement avantageuse, qui comporte un premier flux axial F1 qui passe axialement directement à travers les ouvertures 14 dans la paroi supérieure du capot 2 et les ouvertures 18 du palier arrière en s'écoulant entre les ailettes de refroidissement 4.

Un deuxième flux d'air F2 est produit par le muret 20 qui dévie radialement vers l'extérieur une partie de l'air aspirée à travers chaque ouverture de capot supérieur 14. Ce flux F2 passe sur la face supérieure du radiateur 1 et ainsi sur les diodes positives 2 pour s'écouler ensuite axialement dans l'espace annulaire entre le capot 12 et le radiateur 1 puis dans l'espace entre le radiateur 1 et le palier arrière 6 radialement en direction de l'axe de la machine avant de passer à travers les ouvertures 18 dans le palier arrière, sur l'effet d'un troisième flux F3 qui entre par les ouvertures latérales 16 du capot 12 et s'écoule radialement en joignant le flux F2 dans l'espace entre la face inférieure 23 du radiateur 1 et la face supérieure du palier 6.

Il est à noter que le connecteur 9 est positionné au-dessus du radiateur 1 de façon à obtenir une bonne canalisation radiale du flux F2. Le positionnement du radiateur 1 par rapport, d'une part au connecteur 9, et, d'autre part au palier 6 est également important. Il s'est avéré que l'on obtienne un positionnement optimum lorsque l'on respecte la fourchette des valeurs suivantes :

$$0,85 < D2/D1 < 1,25.$$

où D1 est la distance entre le connecteur 9 et la face supérieure du radiateur 1 et D2 est la distance entre la face supérieure du palier arrière 6 et le bord inférieur des prolongements 22 des ailettes de refroidissement 4 sous le radiateur 1.

Concernant le muret 20, en choisissant bien sa forme, on peut optimiser son effet, c'est-à-dire la déviation d'une partie de l'air qui entre en axial à travers les ouvertures supérieures 14 et qui passe ensuite radialement pour refroidir le radiateur ou dissipateur positif. Ce flux F2 vers l'extérieur de la machine au-dessus du radiateur positif est ensuite repoussé vers l'intérieur sous le radiateur par le flux F3 qui entre par les ouvertures latérales 16 du capot en face de l'espace situé entre le palier arrière et le radiateur. Les portions d'ailettes sous le radiateur assurent encore un meilleur refroidissement.

Il est à noter que l'espace entre les pièces a été optimisé pour le flux F3 de façon que les pertes de charge dans la machine soient réduites au minimum. En effet, moins il y a perte de charge, plus la vitesse du flux de refroidissement est grande or celle-ci est importante pour le refroidissement des pièces. Il est ainsi avantageux de choisir de façon que D2 soit supérieure à D1.

Il est encore à noter que le refroidissement des diodes négatives peut être optimisé en dimensionnant de façon appropriée la forme des surépaisseurs tronconiques 22. En effet, ces surépaisseurs permettent d'augmenter la surface d'échange thermique entre le palier arrière et l'air et accomplissent la fonction d'ailettes de refroidissement par convection tout en constituant des obstacles pour l'écoulement du flux en occasionnant des pertes de charge.

A titre d'exemple, pour des alternateurs de 2,5 à 3 kW, on obtient une optimisation entre la masse de dissipation thermique et les pertes de charge par l'écoulement de refroidissement pour une épaisseur du palier arrière e = 5mm + 2 et - 1 mm en choisissant la largeur supérieure l sur la figure 2B a une valeur minimale de 1,5 mm de façon à avoir suffisamment de matière pour dissiper la chaleur par conduction et au maximum de 3mm pour minimiser les pertes de charges. La hauteur h pour les mêmes raisons doit être comprise entre 2 mm et 4 mm, ce qui permet d'optimiser aussi l'encombrement axial. Il est possible de formuler une relation optimale pour la pente du cône tel que :

$$1 < h/l < 5$$

où h est la hauteur de la face supérieure de la surépaisseur tronconique par rapport à la face supérieure du palier et constitue la distance horizontale entre le début et la fin de la pente p.

Selon encore un autre caractéristique essentiel de l'invention, la forme et la surface d'échange des ailettes radiales 4 ont été optimisées pour obtenir un refroidissement optimal dans un encombrement minimal. Les figures 4A à 4D montrent trois possibilités de configuration de ces ailettes. Il est à noter que le pourtour extérieur du radiateur positif et aussi du muret éventuel peut être ondulé si bien que l'extension radiale des ailettes est différente.

Le mode de réalisation des ailettes illustré sur la figure 4A a pour particularité que les ailettes sont fines.

La particularité du mode de réalisation selon les figures 4B et 4D réside dans le fait que les ailettes sont groupées par trois, les ailettes extérieures étant reliées par un muret de fermeture 26. La figure 4C préconise également le groupement des ailettes, mais sous forme de groupes à quatre ailettes, avec un muret continue de liaison 28 sur les extrémités des ailettes extérieures de chaque groupe. Les avantages des figures 4A à 4D seront décrits ci-après

On constate que les ailettes sont disposées en face des ouvertures axiales du capot et du palier pour optimiser le refroidissement par une surface d'échange maximal et une diminution des pertes de charge.

La figure 3 montre un autre mode de réalisation de l'agencement de redressement selon l'invention. Sur la figure 3 on utilise les mêmes chiffres de référence pour les pièces et éléments identiques ou similaires au mode de réalisation selon la figure 1. La particularité du mode de réalisation selon la figure 3 réside dans le fait que le connecteur 9 est disposé entre le radiateur positif 1 et le palier arrière 6, ce qui permet un montage tête-bêche des diodes positives et négatives (non représentées).

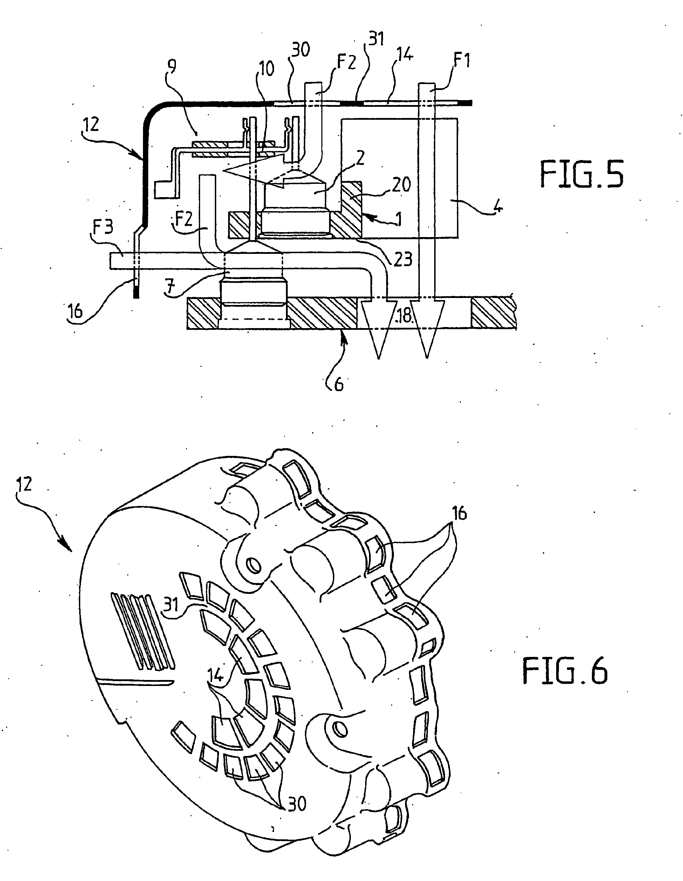

Les figures 5 et 6 montrent un autre mode de réalisation de l'agencement de redressement selon l'invention. Ce mode de réalisation a pour particularité avantageuse que le flux F2 de refroidissement par convection du radiateur 1, en s'écoulant le long des surfaces supérieure et inférieure de ce dernier, entre par des ouvertures spécifiques 30 pratiquées dans la paroi supérieure de fond du capot 12 au-dessus des diodes positives 2. Les ouvertures 30 sont séparées des ouvertures 14 par une zone annulaire pleine 31 qui est située, dans la direction axiale de la machine, sensiblement au-dessus du muret 20. Comme le montre la figure 6, les ouvertures 30 sont disposées, comme les ouvertures 14, dans une zone en forme d'un arc de cercle, coaxiale à la zone des ouvertures 14 et radialement à l'extérieur de cette dernière.

On constate en outre que, dans le mode de réalisation de la figure 5, la surface supérieure du palier arrière 6 ne comporte pas de surépaisseurs tronconiques d'implantation pour les diodes négatives 7. Ces diodes sont implantées dans une surface supérieure de palier, qui est plane. Enfin, les ailettes radiales 4 se terminent du côté de la surface inférieure 23 du radiateur positif 1 au niveau de cette surface. Par conséquent il n'y a pas de portion d'ailette sous le radiateur, comme dans le cas de la figure 1. Il est cependant à noter que les considérations concernant les distances D1 et D2 telles que faites plus haut, sont applicables aussi au mode de réalisation selon la figure 5.

Un autre avantage de l'agencement de redressement selon l'invention réside dans son assemblage aisé. En effet, l'assemblage se réalise par empilement des différents composants par le haut de la machine, c'est-à-dire par l'extérieur. Ceci permet d'assembler le palier arrière avant de le monter sur le reste de la machine. De même les diodes sont emmanchées dans le même sens avec les queues de diodes toutes dirigées vers le haut, ce qui permet de n'utiliser qu'un seul moyen de soudage et de supprimer le transfert de pièces. De plus, les diodes sont positionnées de façon qu'il n'y ait qu'un seul plan de soudage. Le positionnement des pièces a été conçu de façon à avoir les pièces les plus lourdes le plus proche possible des fixations pour en limiter le porte à faux. Ceci permet une meilleure fiabilité, et de faire en sorte que des vibrations et des fréquences de résonance soient plus hautes afin d'éviter des pointes de bruit magnétique aux efforts magnétiques générés par la machine.

Enfin, le pont de redressement peut être branché en triphasé ou en hexaphasé. Du fait de son faible encombrement l'agencement de redressement peut être utilisé également en pont triphasé à six diodes, ou huit diodes (triphasées avec pont neutre redressé) ou douze diodes (hexaphasé ou triphasées dans le cas d'une thermique extrême).

Bien entendu de multiples modifications peuvent être apportées à l'invention telle que décrite et représentée sur les figures. Par exemple, le muret pourrait avoir toute autre forme appropriée et la disposition des ouvertures pourraient être choisies différemment, à condition d'assurer la création des flux de refroidissement F1 à F3.

Cet agencement équipe avantageusement un alternateur du type de celui décrit dans les documents FR-01 04 770 déposé le 5 avril 2001- publié sous le numéro FR-A-2 820 896- et FR-A-2 819 117. Pour plus de précisions on se reportera à ces documents présentant un ventilateur porté par le rotor de l'alternateur et implanté de manière adjacent au palier arrière. Dans ce document le stator comporte un corps interposé entre les paliers avant et arrière et définissant le carter. Ce corps consiste en un paquet de tôles dotées à leur périphérie interne d'encoches dans lesquelles sont montées des éléments électriquement conducteur en forme de barres agencés, à l'extérieur du corps du stator, en réseaux, dont les sorties sont reliées aux connecteurs 9. Ces barres sont avantageusement en forme d'épingles comportant une tête, globalement en forme de U, reliant entre elles deux branches, dont les extrémités libres forment des zones de jonction avec les autres épingles et des branches. Les têtes sont implantées au voisinage du palier arrière. Avantageusement le rotor à griffes de la machine comporte 7 paires de pôles ; le diamètre extérieur du corps cylindrique du stator étant compris entre 132mm et 138mm.

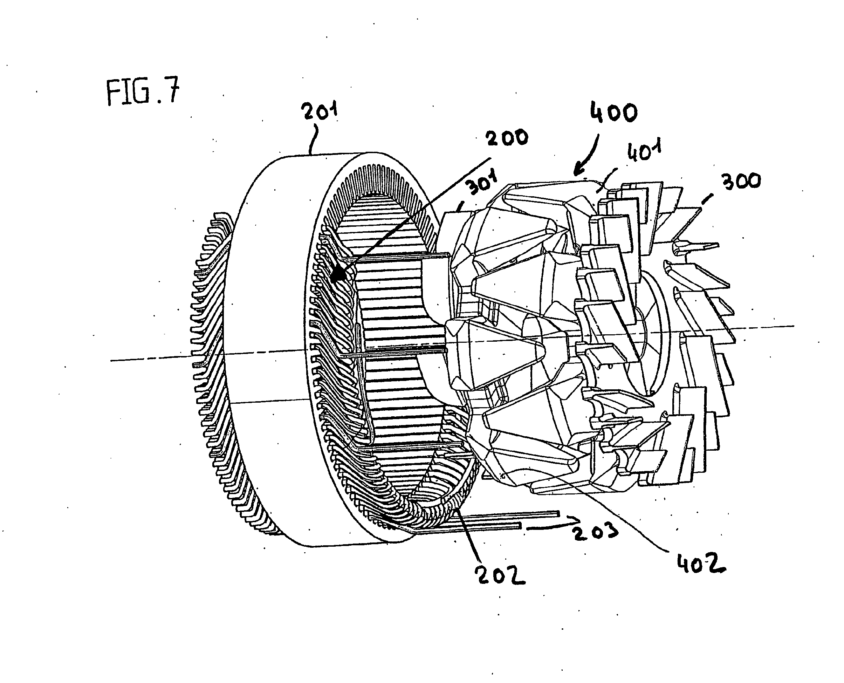

Ainsi dans la figure 7 on voit en 200 un stator dont le corps 201 porte des épingles 202, qui ne sont pas toutes représentées pour monter les encoches, que présente le corps pour passage des branches des épingles 202. Les têtes des épingles forment un chignon à l'extérieur du corps 201 et sont adjacentes au palier arrière 6 mieux visible à la figure 8. On voit en 203 les sorties des phases venant se fixer sur le connecteur 9.

Les têtes des épingles 202 sont placées à l'extérieur d'un ventilateur arrière 300, ici du type centrifuge, porté par l'extrémité axiale arrière d'un rotor à griffes 400, portant à son autre extrémité axiale un ventilateur avant 301 adjacent au palier avant (non visible de l'alternateur).

Les épingles 202 présentent à l'avant des portions soudées à l'extérieur du corps du stator et sont agencées pour former les enroulements des phases du stator comme indiqué dans les documents précités.

Quatre branches d'épingles sont montées par encoches.

Le rotor 400 comporte deux roues polaires 401,402 à griffes entre les plateaux desquels est monté le bobinage d'excitation porté par le rotor.

Ce rotor comporte de manière précitée sept paires de pôles ; les griffes constituant des pôles magnétiques lorsque le bobinage d'excitation est alimenté.

A la figure 8 on voit en perspective l'agencement de redressement du type de celui des figures 1 et 4 associé au rotor et au stator de la figure 7.

Dans cette figure des arrachements sont réalisés pour notamment montrer les pistes électriques du connecteur 9.

On voit dans cette figure en 500 la borne B+ destinée à être reliée à la borne de la batterie du véhicule ainsi que les ailettes 4 d'orientation radiale. Ces ailettes s'étendent dans la direction radiale et canalise l'écoulement du fluide de refroidissement pour le rendre axial.

Le palier arrière 6 est de forme creuse, son fond, en forme de plaque, portant les diodes négatives de la figure 1, tandis que son rebord annulaire d'orientation axiale 161 porte des ouvertures 162 d'évacuation de l'air aspiré par le ventilateur arrière 300 à travers les ouvertures d'admission d'air 18 du fond du palier arrière 6. Le rebord 161 entoure le ventilateur 300 et les têtes des épingles 202.

On voit également en 163 un bras ou patte de fixation de l'alternateur à une partie fixe du véhicule.

Avantageusement un isolant est interposé entre les éléments électriquement conducteurs et les bords des encoches. Cet isolant est monté, dans une forme de réalisation, dans les encoches avant les éléments électriquement conducteurs. Grâce aux éléments conducteurs en forme de barres de préférence de section rectangulaire, on augmente la puissance de l'alternateur. L'agencement de redressement selon l'invention convient bien à ce type d'alternateur. Grâce à l'agencement selon l'invention on peut augmenter la puissance du rotor, celui-ci présentant dans une forme de réalisation un bobinage d'excitation profilé comme décrit dans le document FR-00 06 853 déposé le 29 mai 2001, sachant que le stator entoure le rotor, usuellement à griffes. Ce rotor présente des bagues reliées aux extrémités du bobinage du rotor et servant de pistes de frottement aux balais du porte-balais relié au régulateur de tension.

Etant donné que le radiateur positif est obtenu par moulage, il est pourvu d'un grand nombre de fines ailettes de refroidissement 4 (figure 4A), qui s'étendent radialement vers l'axe 1 de l'alternateur. Les ailettes s'étendent dans un plan orienté à la fois radialement et parallèlement à l'axe de la machine. Les ailettes qui ont une extension importante à la fois dans la direction axiale et radiale procurent au radiateur une très grande surface d'échange thermique et compensent ainsi le manque de place à l'arrière des alternateurs. Le grand nombre des fines ailettes permet d'utiliser le radiateur selon l'invention dans des agencements de redressement, c'est-à-dire des ponts redresseurs, de fort ampérage nécessitant l'implantation de douze diodes, à savoir de six diodes sur le radiateur positif et de six diodes dans le radiateur négatif.

Cependant du fait que les ailettes 4 s'étendent radialement, les bouts des ailettes 4 adjacentes sont très proches les unes des autres. La proximité des ailettes au niveau de leurs bouts a pour inconvénient une fragilité de l'outil de moulage entre les ailettes et une fragilité de l'outil de découpe utilisé pour supprimer les bavures de moulage entre ces ailettes. D'autre part, les rayons de sommet d'ailette sont extrêmement faibles. Ceci est encore aggravé par la dépouille nécessaire au démoulage des pièces. Ainsi il existe un risque de mauvais remplissage du moule et de dépose d'aluminium dans le moule à cet endroit. A ces problèmes s'ajoute la fragilité des ailettes lors des manipulations.

Les figures 4B et 4C montrent deux solutions aux problèmes qui viennent d'être exposés. Dans le mode de réalisation d'un radiateur positif perfectionné selon la figure 4A on groupe les ailettes par trois et on relie les bouts des deux ailettes extérieures de chaque groupe ainsi créées par une barrette de liaison 26, tandis que l'ailette centrale reste libre. Dans le mode de réalisation illustré sur la figure 4C, les différentes barrettes de liaison sont réunies pour former un muret de liaison continu s'étendant entre les deux ailettes les plus extérieures.

La figure 4D illustre la possibilité avantageuse de réaliser des talons de lavage 74 associés aux barrettes de liaison, ce qui permet une optimisation des conditions de remplissage du moule. Ces talons 74 sont supprimés après l'opération de moulage et permettent d'obtenir de fines barrettes.

Les radiateurs positifs qui viennent d'être décrits présentent de nombreux avantages. Toutes les versions de réalisation représentées présentent l'avantage important d'une grande surface d'échange thermique que procure le grand nombre des fines ailettes de refroidissement. Etant donné que le radiateur est réalisé sous forme d'une plaque unique, les ailettes peuvent être implantées de façon régulière sur pratiquement tout le bord radialement interne du radiateur.

Les radiateurs positifs perfectionnés selon les figures 4A à 4D présentent des avantages supplémentaires tels qu'une rigidification de l'outil de moulage entre les ailettes, une augmentation du rayon de sommet des ailettes non reliées entre elles, ce qui apporte une minimisation du risque de mauvais remplissage du moule et de dépose d'aluminium dans le moule à cet endroit, une suppression du faible rayon en bout d'ailettes pour les ailettes reliées entre elles, ce qui contribue à la suppression du risque d'un mauvais remplissage du moule ou de dépose d'aluminium dans le moule à cet endroit. Par conséquent cela procure des meilleures conditions de remplissage du moule. La canalisation du flux d'air dans les zones d'ailettes reliées entre elles assure une augmentation de l'efficacité du radiateur par un effet venturi. La rigidification du radiateur procurée par les barrettes de liaison ou le muret de liaison assurent une réduction du risque de détérioration des radiateurs lors des manipulations et une réduction du bruit par mise en résonance des ailettes. Il est encore à noter que cela procure une augmentation du volume d'aluminium dans un même encombrement et par conséquent une meilleure efficacité du radiateur dans les phases transitoires.

**Revendications**

1. Agencement de redressement de courant pour machines électriques tournantes, notamment alternateurs pour véhicule automobile, comportant, placés dans un carter, un stator et un rotor monté à l'intérieur du stator, rotatif dans des paliers avant et arrière (6), l'agencement étant du type comprenant une pluralité de diodes positives (2) supportées par un support en forme de plaque, une pluralité de diodes négatives (7) supportée par un support en forme de plaque, tel que le palier arrière (6), un dispositif connecteur pour électriquement interconnecter les diodes positives et négatives et des moyens générateurs d'un flux forcé d'un fluide de refroidissement, s'écoulant dans la direction axiale de la machine, le support des diodes positives portant sur sa face frontale orientée vers l'axe de la machine des ailettes de refroidissement (4) qui s'étendent dans ledit écoulement axial du fluide de refroidissement dans la direction radiale de la machine, comportant des moyens de refroidissement mixtes du support des diodes négatives par convection et conduction, **caractérisé en ce qu'**il comporte des moyens de refroidissement du support (1) des diodes positives (2) par un flux de fluide de refroidissement radial (F2),
**en ce que** les moyens de refroidissement par un flux de fluide de refroidissement radial (F2) comportent des ouvertures (14, 30) qui sont prévues dans la paroi du carter, qui recouvre l'agencement en s'étendant perpendiculairement à l'axe de la machine, et **en ce que** le support (1) des diodes positives (2) comporte, sur son bord orienté vers l'axe de la machine, des moyens de déviation d'une partie du flux de fluide de refroidissement axial (F1) pour créer le flux radial (F2) qui passe au-dessus de la surface supérieure du support (1) dans laquelle sont implantées les diodes positives (2).

2. Agencement selon la revendication 1, **caractérisé en ce que** le carter (12) comporte au niveau du palier arrière (6) de support des diodes négatives (7) des orifices latéraux (16) d'entrée d'un flux de fluide de refroidissement radial (F3), sous l'effet de l'écoulement du flux axial de fluide de refroidissement (F1), qui passe au-dessus de la surface supérieure du palier dans laquelle sont implantées des diodes négatives (7).

3. Agencement selon la revendication 2, **caractérisé en ce que** les diodes négatives sont implantées dans des surépaisseurs locales (22) sur la face supérieure du palier arrière (6) de la machine.

4. Agencement selon la revendication 3, **caractérisé en ce que** les surépaisseurs présentent une forme tronconique dans la face supérieure desquelles sont implantées les diodes négatives (7).

5. Agencement selon l'une des revendications précédentes, **caractérisé en ce que** le flux de fluide de refroidissement radial (F2) est amené à s'écouler sous le support (1) des diodes positives en direction de l'axe de la machine pour rejoindre le flux de fluide de refroidissement axial (F1).

6. Agencement selon la revendication 5, **caractérisé en ce que** l'écoulement radial vers l'axe de la machine, du flux de fluide de refroidissement radial (F2) sous le support (1) de diodes positives (2), est entraîné par le fluide de refroidissement radial (F3).

7. Agencement selon l'une quelconque des revendications précédentes, **caractérisé en ce que** les moyens de refroidissement par le flux de fluide radial (F2) comporte au bord orienté vers l'axe de la machine, du support (1) des diodes positives (2) un élément tel qu'un muret (20), qui fait saillie du support en direction des ouvertures d'entrée (14, 30) entre les flux de fluide de refroidissement (F1 et F2).

8. Agencement selon l'une des revendications 1 à 7, **caractérisé en ce que** le support (1) des diodes positives (2) est disposé entre le dispositif connecteur (9) et le palier arrière (6) de façon que le rapport de sa distance (D2) du palier (6) et de sa distance (D1) du connecteur (9) soit compris entre 0,85 et 1,25.

9. Agencement selon la revendication 8, **caractérisé en ce que** le rapport précité des distances est avantageusement supérieur à 1.

10. Agencement selon l'une des revendications 4 à 9 prise en dépendance de la revendication 3, **caractérisé en ce que** la relation entre la masse de dissipation thermique que constitue les surépaisseurs (22) d'implantation des diodes négatives (7) et les pertes de charge que ces surépaisseurs occasionnent est susceptible d'être optimisée par un dimensionnement approprié de la forme du surépaisseur.

11. Agencement selon l'une des revendications 1 à 10, **caractérisé en ce que** les ouvertures pratiquées dans la paroi de recouvrement du carter (12) comportent, juxtaposées dans la direction radiale de la machine, des ouvertures (14) d'entrée du flux de fluide de refroidissement axial (F1) et des ouvertures (30) d'entrée du fluide de refroidissement pour le flux de fluide de refroidissement radial (F2).

12. Agencement selon les revendications 7 et 11, **caractérisé en ce que** les ouvertures précitées (14, 30) d'entrée des flux de fluide de refroidissement (F1 et F2) sont séparées par une zone annulaire pleine (31) du carter, située au niveau au-dessus du muret (20).

**Patentansprüche**

1. Stromgleichrichteranordnung für drehende elektrische Maschinen, insbesondere Drehstromgeneratoren für Kraftfahrzeuge, die in einem Gehäuse angeordnet einen Stator und einen innerhalb des Stators montierten Rotor aufweist, der in vorderen und hinteren Lagern (6) drehbar ist, wobei die Anordnung von der Art ist, die eine Vielzahl von positiven Dioden (2), die von einem plattenförmigen Träger getragen werden, eine Vielzahl von negativen Dioden (7), die von einem plattenförmigen Träger wie dem hinteren Lager (6) getragen werden, eine Verbindervorrichtung, um die positiven und negativen Dioden elektrisch miteinander zu verbinden, und Einrichtungen zur Erzeugung eines Zwangsflusses eines Kühlfluids enthält, der in der axialen Richtung der Maschine strömt, wobei der Träger der positiven Dioden auf seiner zur Achse der Maschine ausgerichteten Stirnseite Kühlrippen (4) trägt, die sich in der axialen Strömung des Kühlfluids in der radialen Richtung der Maschine erstrecken,
die gemischte Kühleinrichtungen des Trägers der negativen Dioden durch Konvektion und Wärmeleitung aufweist,
**dadurch gekennzeichnet, dass** sie Einrichtungen zur Kühlung des Trägers (1) der positiven Dioden (2) durch einen radialen Kühlfluidfluss (F2) aufweist, dass die Einrichtungen zur Kühlung durch einen radialen Kühlfluidfluss (F2) Öffnungen (14, 30) aufweisen, die in der Wand des Gehäuses vorgesehen sind, die die Anordnung bedeckt, indem sie sich lotrecht zur Achse der Maschine erstreckt,
und dass der Träger (1) der positiven Dioden (2) auf seinem zur Achse der Maschine ausgerichteten Rand Einrichtungen zur Umlenkung eines Teils des axialen Kühlfluidflusses (F1) aufweist, um den radialen Fluss (F2) zu erzeugen, der über die Oberfläche des Trägers (1) geht, in die die positiven Dioden (2) eingesetzt sind.

2. Anordnung nach Anspruch 1, **dadurch gekennzeichnet, dass** das Gehäuse (12) im Bereich des hinteren Traglagers (6) der negativen Dioden (7) seitliche Eingangsöffnungen (16) eines radialen Kühlfluidflusses (F3) unter der Wirkung der Strömung des axialen Kühlfluidflusses (F1) aufweist, die über die Oberfläche des Lagers geht, in die negative Dioden (7) eingesetzt sind.

3. Anordnung nach Anspruch 2, **dadurch gekennzeichnet, dass** die negativen Dioden in lokale Überdicken (22) an der Oberseite des hinteren Lagers (6) der Maschine eingesetzt sind.

4. Anordnung nach Anspruch 3, **dadurch gekennzeichnet, dass** die Überdicken eine Kegelstumpfform haben, in deren Oberseite die negativen Dioden (7) eingesetzt sind.

5. Anordnung nach einem der vorhergehenden Ansprüche, **dadurch gekennzeichnet, dass** der radiale Kühlfluidfluss (F2) dazu gebracht wird, unter dem Träger (1) der positiven Dioden in Richtung der Achse der Maschine zu strömen, um sich mit dem axialen Kühlfluidfluss (F1) zu vereinen.

6. Anordnung nach Anspruch 5, **dadurch gekennzeichnet, dass** die radiale Strömung des radialen Kühlfluidflusses (F2) zur Achse der Maschine unter dem Träger (1) positiver Dioden (2) durch den radialen Kühlfluidfluss (F3) angetrieben wird.

7. Anordnung nach einem der vorhergehenden Ansprüche, **dadurch gekennzeichnet, dass** die Einrichtungen zur Kühlung durch den radialen Kühlfluidfluss (F2) am zur Achse der Maschine ausgerichteten Rand des Trägers (1) der positiven Dioden (2) ein Element wie einen hochstehenden Rand (20) aufweisen, der vom Träger in Richtung der Eingangsöffnungen (14, 30) zwischen den Kühlfluidflüssen (F1 und F2) vorsteht.

8. Anordnung nach einem der Ansprüche 1 bis 7, **dadurch gekennzeichnet, dass** der Träger (1) der positiven Dioden (2) zwischen der Verbindervorrichtung (9) und dem hinteren Lager (6) so angeordnet ist, dass das Verhältnis zwischen seinem Abstand (D2) zum Lager (6) und seinem Abstand (D1) zum Verbinder (9) zwischen 0,85 und 1,25 liegt.

9. Anordnung nach Anspruch 8, **dadurch gekennzeichnet, dass** das erwähnte Verhältnis der Abstände vorteilhafterweise größer als 1 ist.

**10.** Anordnung nach einem der Ansprüche 4 bis 9 abhängig von Anspruch 3, **dadurch gekennzeichnet, dass** die Beziehung zwischen der Wärmeableitungsmasse, die die Einsetzüberdicken (22) der negativen Dioden (7) bilden, und den Druckverlusten, die diese Überdicken verursachen, durch eine geeignete Bemessung der Form der Überdicken optimiert werden kann.

**11.** Anordnung nach einem der Ansprüche 1 bis 10, **dadurch gekennzeichnet, dass** die in der Abdeckungswand des Gehäuses (12) ausgeführten Öffnungen in radialer Richtung der Maschine nebeneinander angeordnet Eingangsöffnungen (14) des axialen Kühlfluidflusses (F1) und Eingangsöffnungen (30) des Kühlfluids für den radialen Kühlfluidfluss (F2) aufweisen.

**12.** Anordnung nach den Ansprüchen 7 und 11, **dadurch gekennzeichnet, dass** die erwähnten Eingangsöffnungen (14, 30) der Kühlfluidflüsse (F1 und F2) durch eine massive ringförmige Zone (31) des Gehäuses getrennt sind, die sich im Bereich über dem hochstehenden Rand (20) befindet.

**Claims**

**1.** Current rectifying arrangement for rotating electric machines, notably alternators for motor vehicles, comprising, placed in a casing, a stator and a rotor mounted inside the stator, rotating in front and rear bearings (6), the arrangement being of the type comprising a plurality of positive diodes (2) supported by a support in plate form, a plurality of negative diodes (7) supported by a support in plate form, such as the rear bearing (6), a connector device for electrically interconnecting the positive and negative diodes and means for generating a forced flow of a coolant, flowing in the axial direction of the machine, the support of the positive diodes bearing, on its front face oriented towards the axis of the machine, cooling fins (4) which extend in said axial flow of the coolant in the radial direction of the machine,
comprising mixed cooling means for the support of the negative diodes by convection and conduction, **characterized in that** it comprises means for cooling the support (1) of the positive diodes (2) by a radial flow of coolant (F2),
**in that** the means for cooling by a radial flow of coolant (F2) comprise openings (14, 30) which are provided in the wall of the casing, which covers the arrangement by extending at right angles to the axis of the machine,
and **in that** the support (1) of the positive diodes (2) comprises, on its edge oriented towards the axis of the machine, means for deflecting a part of the axial flow of coolant (F1) to create the radial flow (F2) which passes over the top surface of the support (1) in which the positive diodes (2) are located.

**2.** Arrangement according to Claim 1, **characterized in that** the casing (12) comprises, at the level of the rear bearing (6) supporting the negative diodes (7), lateral orifices (16) for the entry of a radial flow of coolant (F3), under the effect of the flow of the axial flow of the coolant (F1), which passes over the top surface of the bearing in which the negative diodes (7) are located.

**3.** Arrangement according to Claim 2, **characterized in that** the negative diodes are located in local overthicknesses (22) on the top face of the rear bearing (6) of the machine.

**4.** Arrangement according to Claim 3, **characterized in that** the overthicknesses have a tapered form in the top face of which are located the negative diodes (7).

**5.** Arrangement according to one of the preceding claims, **characterized in that** the radial flow of coolant (F2) is made to flow under the support (1) of the positive diodes towards the axis of the machine to rejoin the axial flow of coolant (F1).

**6.** Arrangement according to Claim 5, **characterized in that** the radial flow towards the axis of the machine, of the radial flow of coolant (F2) under the support (1) of the positive diodes (2), is driven by radial flow of coolant (F3).

**7.** Arrangement according to any one of the preceding claims, **characterized in that** the means for cooling by the radial flow of coolant (F2) comprise, at the edge oriented towards the axis of the machine, of the support (1) of the positive diodes (2), an element such as a curb (20), which protrudes from the support towards the inlet openings (14, 30) between the coolant flows (F1 and F2).

**8.** Arrangement according to one of Claims 1 to 7, **characterized in that** the support (1) of the positive diodes (2) is positioned between the connector device (9) and the rear bearing (6) such that the ratio of its distance (D2) from the bearing (6) and of its distance (D1) from the connector (9) lies between 0.85 and 1.25.

**9.** Arrangement according to Claim 8, **characterized in that** the above mentioned ratio of the distances is advantageously greater than 1.

**10.** Arrangement according to one of Claims 4 to 9 taken as dependent on Claim 3, **characterized in that** the relationship between the heat dissipation mass constituted by the overthicknesses (22) where the negative diodes (7) are located and the head losses that these overthicknesses cause is likely to be optimised by an appropriate dimensioning of the form of the overthicknesses.

11. Arrangement according to one of Claims 1 to 10, **characterized in that** the openings formed in the wall covering the casing (12) comprise, juxtaposed in the radial direction of the machine, inlet openings (14) for the axial flow of coolant (F1) and inlet openings (30) for the coolant for the radial flow of coolant (F2).

12. Arrangement according to Claims 7 and 11, **characterized in that** the abovementioned inlet openings (14, 30) for the coolant flows (F1 and F2) are separated by a solid annular zone (31) of the casing, situated at the level above the curb (20).

FIG.1

FIG.2A

FIG.2B

FIG.3

FIG.4A

FIG.4B

FIG.4C

FIG.4

FIG.5

FIG.6

FIG.7

EP 1 407 527 B1

FIG.8

EP 1 407 527 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2687861
- EP 0515259 A
- FR 0104770
- FR 2820896 A
- FR 2819117 A
- FR 0006853